# EUROPEAN PATENT SPECIFICATION

(11) **EP 3 332 362 B1**
(45) Date of publication and mention of the grant of the patent: **30.10.2024**
(21) Application number: 16745332.3
(22) Date of filing: 20.07.2016
(51) Int. Cl.: G06N 20/00, G06V 10/44, G06V 10/764, G06V 10/774, G06V 10/82, G06N 3/045

(54) **DETECTION OF UNKNOWN CLASSES AND INITIALIZATION OF CLASSIFIERS FOR UNKNOWN CLASSES**
ERKENNUNG UNBEKANNTER KLASSEN UND INITIALISIERUNG VON KLASSIFIKATOREN FÜR UNBEKANNTE KLASSEN
DÉTECTION DE CLASSES INCONNUES ET INITIALISATION DE CLASSIFICATEURS POUR DES CLASSES INCONNUES

(30) Priority: 04.08.2015 US 201562201090 P; 09.09.2015 US 201514849518
(43) Date of publication of application: 13.06.2018
(73) Proprietor: Qualcomm Incorporated, San Diego, CA 92121-1714 (US)
(72) Inventor: MAJUMDAR, Somdeb, San Diego, California 92121-1714 (US); LIN, Dexu, San Diego, California 92121-1714 (US); TOWAL, Regan Blythe, San Diego, California 92121-1714 (US); SARAH, Anthony, San Diego, California 92121-1714 (US)
(74) Representative: Dunlop, Hugh Christopher
(86) International application number: PCT/US2016/043146
(87) International publication number: WO 2017/023551

(56) References cited:
- US-A1- 2013 238 533
- BORIS SOFMAN ET AL: "Anytime online novelty detection for vehicle safeguarding", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 1247 - 1254, XP031743292, ISBN: 978-1-4244-5038-1
- THOMAS LANDGREBE ET AL: "Optimising Two-Stage Recognition Systems", 26 May 2005, MULTIPLE CLASSIFIER SYSTEMS; [LECTURE NOTES IN COMPUTER SCIENCE;;LNCS], SPRINGER-VERLAG, BERLIN/HEIDELBERG, PAGE(S) 206 - 215, ISBN: 978-3-540-26306-7, XP019010388
- NOMI VINOKUROV ET AL: "Novelty Detection in MultiClass Scenarios with Incomplete Set of Class Labels", CORR (ARXIV), vol. abs/1604.06242v2, 15 May 2016 (2016-05-15), XP055309207
- TAX D M J ET AL: "Growing a multi-class classifier with a reject option", PATTERN RECOGNITION LETTERS, ELSEVIER, AMSTERDAM, NL, vol. 29, no. 10, 15 July 2008 (2008-07-15), pages 1565 - 1570, XP022698275, ISSN: 0167-8655, [retrieved on 20080330], DOI: 10.1016/J.PATREC.2008.03.010
- MARKOU M ET AL: "Novelty detection: a review-part 1: statistical approaches", SIGNAL PROCESSING, ELSEVIER SCIENCE PUBLISHERS B.V. AMSTERDAM, NL, vol. 83, no. 12, 1 December 2003 (2003-12-01), pages 2481 - 2497, XP004467982, ISSN: 0165-1684, DOI: 10.1016/J.SIGPRO.2003.07.018
- YADAV BALVANT ET AL: "Novelty detection applied to the classification problem using Probabilistic Neural Network", 2014 IEEE SYMPOSIUM ON COMPUTATIONAL INTELLIGENCE AND DATA MINING (CIDM), IEEE, 9 December 2014 (2014-12-09), pages 265 - 272, XP032720656, DOI: 10.1109/CIDM.2014.7008677
- DAVID M J TAX ET AL: "Uniform object generation for optimizing one-class classifiers", JOURNAL OF MACHINE LEARNING RESEARCH, MIT PRESS, CAMBRIDGE, MA, US, vol. 2, 1 March 2002 (2002-03-01), pages 155 - 173, XP058186357, ISSN: 1532-4435
- JEAN E NONNEMAKER: "The safe use of synthetic data in classification", PHD THESIS, 1 December 2008 (2008-12-01), XP055346940, ISBN: 978-1-109-16688-0, Retrieved from the Internet <URL:http://www.lehigh.edu/~jen2/Nonnemaker_dissertation.pdf> [retrieved on 20170216]
- RAFAEL DA VEIGA CABRAL ET AL: "Evaluating an outlier generation method for training tree-based Genetic Programming applied to one-class classification", NATURE AND BIOLOGICALLY INSPIRED COMPUTING (NABIC), 2011 THIRD WORLD CONGRESS ON, IEEE, 19 October 2011 (2011-10-19), pages 395 - 400, XP032028461, ISBN: 978-1-4577-1122-0, DOI: 10.1109/NABIC.2011.6089468

## Description

### BACKGROUND

### Field

Certain aspects of the present disclosure generally relate to machine learning and, more particularly, to improving systems and methods for detecting unknown classes and initializing classifiers for unknown classes.

### Background

An artificial neural network, which may comprise an interconnected group of artificial neurons (e.g., neuron models), is a computational device or represents a method to be performed by a computational device. Artificial neural networks may have corresponding structure and/or function in biological neural networks.

Convolutional neural networks are a type of feed-forward artificial neural network. Convolutional neural networks may include layers of neurons that may be configured in a tiled receptive field. Convolutional neural networks (CNNs) have numerous applications. In particular, CNNs have broadly been used in the area of pattern recognition and classification.

Deep learning architectures, such as deep belief networks and deep convolutional networks, have increasingly been used in object recognition applications. Like convolutional neural networks, computation in these deep learning architectures may be distributed over a population of processing nodes, which may be configured in one or more computational chains. These multi-layered architectures offer greater flexibility as they may be trained one layer at a time and may be fine-tuned using back propagation.

Other models are also available for object recognition. For example, support vector machines (SVMs) are learning tools that can be applied for classification. Support vector machines include a separating hyperplane (e.g., decision boundary) that categorizes data. The hyperplane is defined by supervised learning. A desired hyperplane increases the margin of the training data. In other words, the hyperplane should have the greatest minimum distance to the training examples.

Although these solutions achieve excellent results on a number of classification benchmarks, their computational complexity can be prohibitively high. Additionally, training of the models may be challenging.

Thomas Landgrebe Et. Al. "Optimising Two-Stage Recognition Systems", 26 May 2005, MULTIPLE CLASSIFIER SYSTEMS (MCS 2005), pages 206-215, relates to a two-stage multiple classifier system. MARKOU M ET AL: "Novelty detection: a review-part 1: statistical approaches", SIGNAL PROCESSING, ELSEVIER SCIENCE PUBLISHERS B.V. AMSTERDAM, NL, vol. 83, no. 12, 1 December 2003, pages 2481-2497, relates to statistical approaches for determining novel patterns in data sets. Yadav Balvant Et. Al. "Novelty detection applied to the classification problem using Probabilistic Neural Network",2014 IEEE SYMPOSIUM ON COMPUTATIONAL INTELLIGENCE AND DATA MINING (CIDM), relates to determining novel patterns in data sets. Jean E Nonnemaker: "The safe use of synthetic data in classification", PhD Thesis, 1 December 2008, relates to training data.

### SUMMARY

The invention is set forth in the independent claims. Further embodiments are defined in the dependent claims. In one aspect of the present disclosure, a method of detecting unknown classes is disclosed according to claim 1. The method includes generating a first classifier for a first classes. In one configuration, an output of the first classifier has a dimension of at least two. The method also includes designing a second classifier to receive the output of the first classifier to decide whether input data belongs to the first classes or at least one second class.

Another aspect of the present disclosure is directed to an apparatus according to claim 11.

In another aspect of the present disclosure, a computer program product for detecting unknown classes is disclosed according to claim 10.

Additional features and advantages of the disclosure will be described below. It should be appreciated by those skilled in the art that this disclosure may be readily utilized as a basis for modifying or designing other structures for carrying out the same purposes of the present disclosure. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout.
FIGURE 1 illustrates an example implementation of designing a neural network using a system-on-a-chip (SOC), including a general-purpose processor in accordance with certain aspects of the present disclosure.
FIGURE 2 illustrates an example implementation of a system in accordance with aspects of the present disclosure.
FIGURE 3A is a diagram illustrating a neural network in accordance with aspects of the present disclosure.
FIGURE 3B is a block diagram illustrating an exemplary deep convolutional network (DCN) in accordance with aspects of the present disclosure.
FIGURE 4 is a block diagram illustrating an exemplary software architecture that may modularize artificial intelligence (AI) functions in accordance with aspects of the present disclosure.
FIGURE 5 is a block diagram illustrating the run-time operation of an AI application on a smartphone in accordance with aspects of the present disclosure.
FIGURES 6 and 7 illustrate examples of binary classifiers according to aspects of the present disclosure.
FIGURES 8A and 8B illustrate methods for detecting unknown classes according to aspects of the present disclosure.
FIGURES 9A and 9B illustrate methods for generating synthetic unknown data according to aspects of the present disclosure.
FIGURE 10 is flow diagram illustrating a method for unknown class detection according to aspects of the present disclosure.
FIGURE 11 is a flow diagram illustrating a method for generating synthetic unknown data according to aspects of the present disclosure.
FIGURE 12 is flow diagram illustrating a method for unknown class detection and generating synthetic unknown data according to aspects of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

Based on the teachings, one skilled in the art should appreciate that the scope of the disclosure is intended to cover any aspect of the disclosure, whether implemented independently of or combined with any other aspect of the disclosure. For example, an apparatus may be implemented or a method may be practiced using any number of the aspects set forth. In addition, the scope of the disclosure is intended to cover such an apparatus or method practiced using other structure, functionality, or structure and functionality in addition to or other than the various aspects of the disclosure set forth. It should be understood that any aspect of the disclosure disclosed may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses or objectives. Rather, aspects of the disclosure are intended to be broadly applicable to different technologies, system configurations, networks and protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

A conventional classifier, such as a support vector machine (SVM), may determine decision boundaries between two or more classes. For multi-class classification, several classifier decision boundaries may be generated to classify a sample. Classification refers to associating a sample with a class that was used to train the network. For example, for facial recognition, an image detector may classify an image of a face as belonging to a specific person (e.g., class).

Furthermore, conventional classifiers produce a vector of scores indicating the probability of the sample belonging to each class. A class having the highest probability may be selected as the winning class.

Still, in some cases, a sample does not belong to any of the classes that were used to train a classifier. Thus, it may be desirable to generate a framework to initialize the classifier to label an object as belonging to a known class or belonging to an unknown class (or at least one unknown class). In one configuration, a first classifier is specified to determine classification scores for a sample. Furthermore, a second classifier may be specified to categorize a sample as known or unknown based on the classification scores. Furthermore, in another configuration, a classification boundary for an unknown class may be defined based on random training samples that exclude known classes and/or include synthetically generated negative class data. The negative class data may be referred to as unknown class data or unknown data.

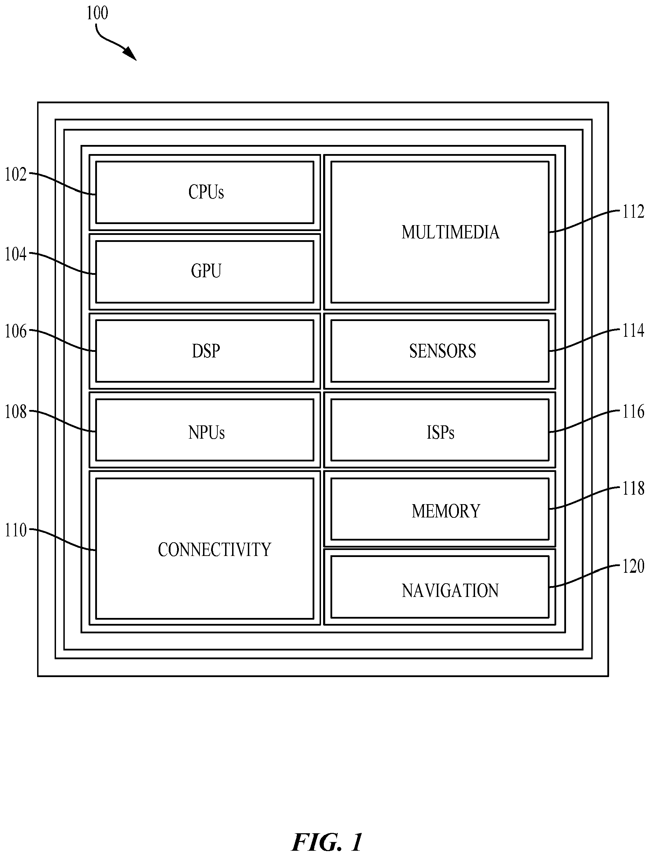

FIGURE 1 illustrates an example implementation of the aforementioned unknown class detection, unknown classifier initialization, and/or synthetic negative data generation using a system-on-a-chip (SOC) 100, which may include a general-purpose processor (CPU) or multi-core general-purpose processors (CPUs) 102 in accordance with certain aspects of the present disclosure. Variables (e.g., neural signals and synaptic weights), system parameters associated with a computational device (e.g., neural network with weights), delays, frequency bin information, and task information may be stored in a memory block (e.g., at least one memory unit) associated with a neural processing unit (NPU) 108 (e.g., at least one processor) or in a dedicated memory block 118. Instructions executed at the general-purpose processor 102 may be loaded from a program memory associated with the CPU 102 or may be loaded from a dedicated memory block 118. The SOC 100 may also include additional processing blocks tailored to specific functions, such as a graphics processing unit (GPU) 104, a digital signal processor (DSP) 106, a connectivity block 110, which may include fourth generation long term evolution (4G LTE) connectivity, unlicensed Wi-Fi connectivity, USB connectivity, Bluetooth connectivity, and the like, and a multimedia processor 112 that may, for example, detect and recognize gestures. The SOC 100 may also include a sensor processor 114, image signal processors (ISPs), and/or navigation 120, which may include a global positioning system. The SOC may be based on an ARM instruction set.

The SOC 100 may also include additional processing blocks tailored to specific functions, such as a GPU 104, a DSP 106, a connectivity block 110, which may include fourth generation long term evolution (4G LTE) connectivity, unlicensed Wi-Fi connectivity, USB connectivity, Bluetooth connectivity, and the like, and a multimedia processor 112 that may, for example, detect and recognize gestures. In one implementation, the NPU is implemented in the CPU, DSP, and/or GPU. The SOC 100 may also include a sensor processor 114, image signal processors (ISPs), and/or navigation 120, which may include a global positioning system.

The SOC 100 may be based on an ARM instruction set. In an aspect of the present disclosure, the instructions loaded into the general-purpose processor 102 may comprise code for generating a first classifier for first classes. In one configuration, the output has a dimension of at least two. The instructions loaded into the general-purpose processor 102 may also comprise code for designing a second classifier to receive the output of the first classifier to decide whether the input data belongs to the first classes or at least one second class.

Additionally, in another aspect of the present disclosure, the instructions loaded into the general-purpose processor 102 may comprise code for obtaining known data from multiple classes. The instructions loaded into the general-purpose processor 102 may also comprise code for synthetically generating negative data as a function of the known data.

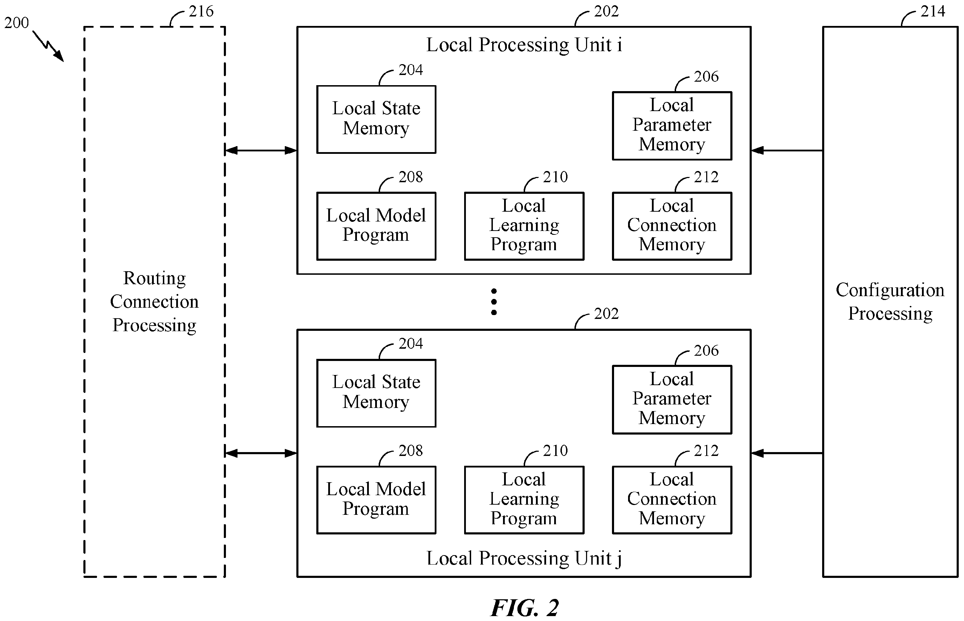

FIGURE 2 illustrates an example implementation of a system 200 in accordance with certain aspects of the present disclosure. As illustrated in FIGURE 2, the system 200 may have multiple local processing units 202 that may perform various operations of methods described herein. Each local processing unit 202 may comprise a local state memory 204 and a local parameter memory 206 that may store parameters of a neural network. In addition, the local processing unit 202 may have a local (neuron) model program (LMP) memory 208 for storing a local model program, a local learning program (LLP) memory 210 for storing a local learning program, and a local connection memory 212. Furthermore, as illustrated in FIGURE 2, each local processing unit 202 may interface with a configuration processor unit 214 for providing configurations for local memories of the local processing unit, and with a routing connection processing unit 216 that provides routing between the local processing units 202.

Deep learning architectures may perform an object recognition task by learning to represent inputs at successively higher levels of abstraction in each layer, thereby building up a useful feature representation of the input data. In this way, deep learning addresses a major bottleneck of traditional machine learning. Prior to the advent of deep learning, a machine learning approach to an object recognition problem may have relied heavily on human engineered features, perhaps in combination with a shallow classifier. A shallow classifier may be a two-class linear classifier, for example, in which a weighted sum of the feature vector components may be compared with a threshold to predict to which class the input belongs. Human engineered features may be templates or kernels tailored to a specific problem domain by engineers with domain expertise. Deep learning architectures, in contrast, may learn to represent features that are similar to what a human engineer might design, but through training. Furthermore, a deep network may learn to represent and recognize new types of features that a human might not have considered.

A deep learning architecture may learn a hierarchy of features. If presented with visual data, for example, the first layer may learn to recognize simple features, such as edges, in the input stream. If presented with auditory data, the first layer may learn to recognize spectral power in specific frequencies. The second layer, taking the output of the first layer as input, may learn to recognize combinations of features, such as simple shapes for visual data or combinations of sounds for auditory data. Higher layers may learn to represent complex shapes in visual data or words in auditory data. Still higher layers may learn to recognize common visual objects or spoken phrases.

Deep learning architectures may perform especially well when applied to problems that have a natural hierarchical structure. For example, the classification of motorized vehicles may benefit from first learning to recognize wheels, windshields, and other features. These features may be combined at higher layers in different ways to recognize cars, trucks, and airplanes.

Neural networks may be designed with a variety of connectivity patterns. In feed-forward networks, information is passed from lower to higher layers, with each neuron in a given layer communicating to neurons in higher layers. A hierarchical representation may be built up in successive layers of a feed-forward network, as described above. Neural networks may also have recurrent or feedback (also called top-down) connections. In a recurrent connection, the output from a neuron in a given layer is communicated to another neuron in the same layer. A recurrent architecture may be helpful in recognizing patterns that span more than one of the input data chunks that are delivered to the neural network in a sequence. A connection from a neuron in a given layer to a neuron in a lower layer is called a feedback (or top-down) connection. A network with many feedback connections may be helpful when the recognition of a high-level concept may aid in discriminating the particular low-level features of an input.

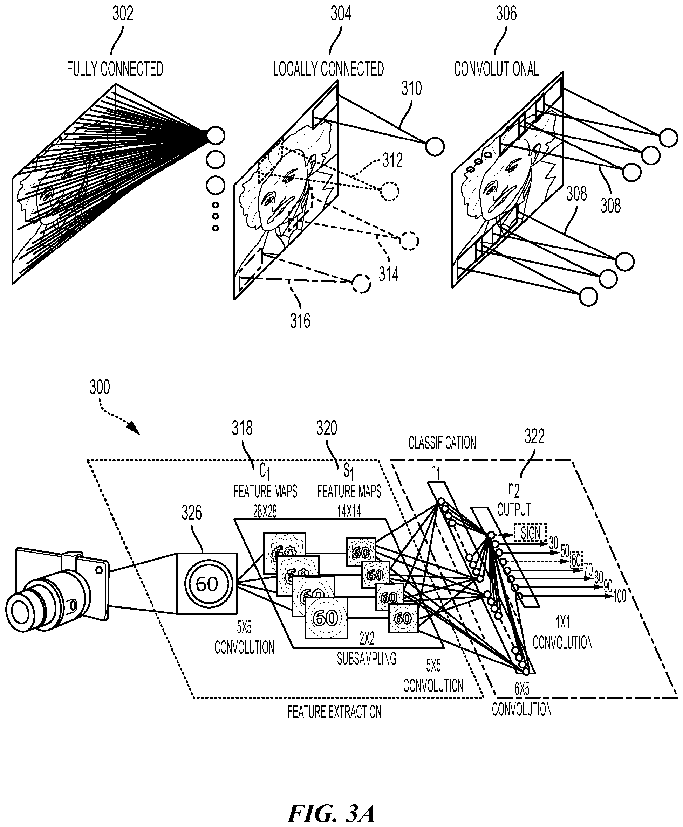

Referring to FIGURE 3A, the connections between layers of a neural network may be fully connected 302 or locally connected 304. In a fully connected network 302, a neuron in a first layer may communicate its output to every neuron in a second layer, so that each neuron in the second layer will receive input from every neuron in the first layer. Alternatively, in a locally connected network 304, a neuron in a first layer may be connected to a limited number of neurons in the second layer. A convolutional network 306 may be locally connected, and is further configured such that the connection strengths associated with the inputs for each neuron in the second layer are shared (e.g., 308). More generally, a locally connected layer of a network may be configured so that each neuron in a layer will have the same or a similar connectivity pattern, but with connections strengths that may have different values (e.g., 310, 312, 314, and 316). The locally connected connectivity pattern may give rise to spatially distinct receptive fields in a higher layer, because the higher layer neurons in a given region may receive inputs that are tuned through training to the properties of a restricted portion of the total input to the network.

Locally connected neural networks may be well suited to problems in which the spatial location of inputs is meaningful. For instance, a network 300 designed to recognize visual features from a car-mounted camera may develop high layer neurons with different properties depending on their association with the lower versus the upper portion of the image. Neurons associated with the lower portion of the image may learn to recognize lane markings, for example, while neurons associated with the upper portion of the image may learn to recognize traffic lights, traffic signs, and the like.

A DCN may be trained with supervised learning. During training, a DCN may be presented with an image 326, such as a cropped image of a speed limit sign, and a "forward pass" may then be computed to produce an output 322. The output 322 may be a vector of values corresponding to features such as "sign," "60," and "100." The network designer may want the DCN to output a high score for some of the neurons in the output feature vector, for example the ones corresponding to "sign" and "60" as shown in the output 322 for a network 300 that has been trained. Before training, the output produced by the DCN is likely to be incorrect, and so an error may be calculated between the actual output and the target output. The weights of the DCN may then be adjusted so that the output scores of the DCN are more closely aligned with the target.

To adjust the weights, a learning algorithm may compute a gradient vector for the weights. The gradient may indicate an amount that an error would increase or decrease if the weight were adjusted slightly. At the top layer, the gradient may correspond directly to the value of a weight connecting an activated neuron in the penultimate layer and a neuron in the output layer. In lower layers, the gradient may depend on the value of the weights and on the computed error gradients of the higher layers. The weights may then be adjusted so as to reduce the error. This manner of adjusting the weights may be referred to as "back propagation" as it involves a "backward pass" through the neural network.

In practice, the error gradient of weights may be calculated over a small number of examples, so that the calculated gradient approximates the true error gradient. This approximation method may be referred to as stochastic gradient descent. Stochastic gradient descent may be repeated until the achievable error rate of the entire system has stopped decreasing or until the error rate has reached a target level.

After learning, the DCN may be presented with new images 326 and a forward pass through the network may yield an output 322 that may be considered an inference or a prediction of the DCN.

Deep belief networks (DBNs) are probabilistic models comprising multiple layers of hidden nodes. DBNs may be used to extract a hierarchical representation of training data sets. A DBN may be obtained by stacking up layers of Restricted Boltzmann Machines (RBMs). An RBM is a type of artificial neural network that can learn a probability distribution over a set of inputs. Because RBMs can learn a probability distribution in the absence of information about the class to which each input should be categorized, RBMs are often used in unsupervised learning. Using a hybrid unsupervised and supervised paradigm, the bottom RBMs of a DBN may be trained in an unsupervised manner and may serve as feature extractors, and the top RBM may be trained in a supervised manner (on a joint distribution of inputs from the previous layer and target classes) and may serve as a classifier.

Deep convolutional networks (DCNs) are networks of convolutional networks, configured with additional pooling and normalization layers. DCNs have achieved state-of-the-art performance on many tasks. DCNs can be trained using supervised learning in which both the input and output targets are known for many exemplars and are used to modify the weights of the network by use of gradient descent methods.

DCNs may be feed-forward networks. In addition, as described above, the connections from a neuron in a first layer of a DCN to a group of neurons in the next higher layer are shared across the neurons in the first layer. The feed-forward and shared connections of DCNs may be exploited for fast processing. The computational burden of a DCN may be much less, for example, than that of a similarly sized neural network that comprises recurrent or feedback connections.

The processing of each layer of a convolutional network may be considered a spatially invariant template or basis projection. If the input is first decomposed into multiple channels, such as the red, green, and blue channels of a color image, then the convolutional network trained on that input may be considered three-dimensional, with two spatial dimensions along the axes of the image and a third dimension capturing color information. The outputs of the convolutional connections may be considered to form a feature map in the subsequent layer 318 and 320, with each element of the feature map (e.g., 320) receiving input from a range of neurons in the previous layer (e.g., 318) and from each of the multiple channels. The values in the feature map may be further processed with a non-linearity, such as a rectification, max(0,x). Values from adjacent neurons may be further pooled, which corresponds to down sampling, and may provide additional local invariance and dimensionality reduction. Normalization, which corresponds to whitening, may also be applied through lateral inhibition between neurons in the feature map.

The performance of deep learning architectures may increase as more labeled data points become available or as computational power increases. Modern deep neural networks are routinely trained with computing resources that are thousands of times greater than what was available to a typical researcher just fifteen years ago. New architectures and training paradigms may further boost the performance of deep learning. Rectified linear units may reduce a training issue known as vanishing gradients. New training techniques may reduce over-fitting and thus enable larger models to achieve better generalization. Encapsulation techniques may abstract data in a given receptive field and further boost overall performance.

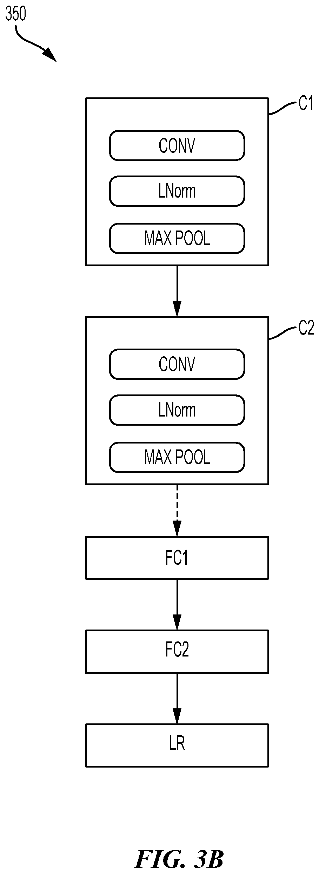

FIGURE 3B is a block diagram illustrating an exemplary deep convolutional network 350. The deep convolutional network 350 may include multiple different types of layers based on connectivity and weight sharing. As shown in FIGURE 3B, the exemplary deep convolutional network 350 includes multiple convolution blocks (e.g., C1 and C2). Each of the convolution blocks may be configured with a convolution layer, a normalization layer (LNorm), and a pooling layer. The convolution layers may include one or more convolutional filters, which may be applied to the input data to generate a feature map. Although only two convolution blocks are shown, the present disclosure is not so limiting, and instead, any number of convolutional blocks may be included in the deep convolutional network 350 according to design preference. The normalization layer may be used to normalize the output of the convolution filters. For example, the normalization layer may provide whitening or lateral inhibition. The pooling layer may provide down sampling aggregation over space for local invariance and dimensionality reduction.

The parallel filter banks, for example, of a deep convolutional network may be loaded on a CPU 102 or GPU 104 of an SOC 100, optionally based on an ARM instruction set, to achieve high performance and low power consumption. In alternative embodiments, the parallel filter banks may be loaded on the DSP 106 or an ISP 116 of an SOC 100. In addition, the DCN may access other processing blocks that may be present on the SOC, such as processing blocks dedicated to sensors 114 and navigation 120.

The deep convolutional network 350 may also include one or more fully connected layers (e.g., FC1 and FC2). The deep convolutional network 350 may further include a logistic regression (LR) layer. Between each layer of the deep convolutional network 350 are weights (not shown) that are to be updated. The output of each layer may serve as an input of a succeeding layer in the deep convolutional network 350 to learn hierarchical feature representations from input data (e.g., images, audio, video, sensor data and/or other input data) supplied at the first convolution block C1.

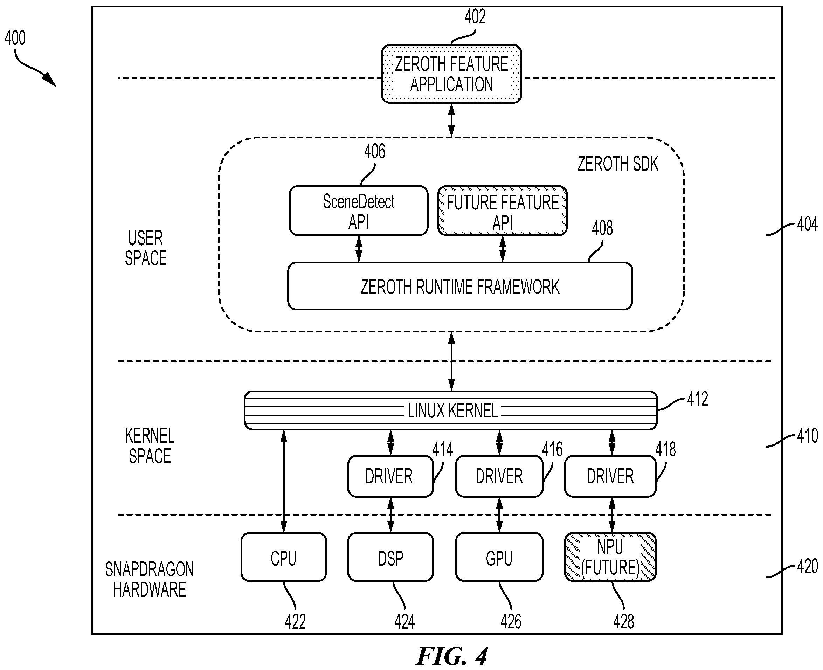

FIGURE 4 is a block diagram illustrating an exemplary software architecture 400 that may modularize artificial intelligence (AI) functions. Using the architecture, applications 402 may be designed that may cause various processing blocks of an SOC 420 (for example a CPU 422, a DSP 424, a GPU 426 and/or an NPU 428) to perform supporting computations during run-time operation of the application 402.

The AI application 402 may be configured to call functions defined in a user space 404 that may, for example, provide for the detection and recognition of a scene indicative of the location in which the device currently operates. The AI application 402 may, for example, configure a microphone and a camera differently depending on whether the recognized scene is an office, a lecture hall, a restaurant, or an outdoor setting such as a lake. The AI application 402 may make a request to compiled program code associated with a library defined in a SceneDetect application programming interface (API) 406 to provide an estimate of the current scene. This request may ultimately rely on the output of a deep neural network configured to provide scene estimates based on video and positioning data, for example.

A run-time engine 408, which may be compiled code of a Runtime Framework, may be further accessible to the AI application 402. The AI application 402 may cause the run-time engine, for example, to request a scene estimate at a particular time interval or triggered by an event detected by the user interface of the application. When caused to estimate the scene, the run-time engine may in turn send a signal to an operating system 410, such as a Linux Kernel 412, running on the SOC 420. The operating system 410, in turn, may cause a computation to be performed on the CPU 422, the DSP 424, the GPU 426, the NPU 428, or some combination thereof. The CPU 422 may be accessed directly by the operating system, and other processing blocks may be accessed through a driver, such as a driver 414-418 for a DSP 424, for a GPU 426, or for an NPU 428. In the exemplary example, the deep neural network may be configured to run on a combination of processing blocks, such as a CPU 422 and a GPU 426, or may be run on an NPU 428, if present.

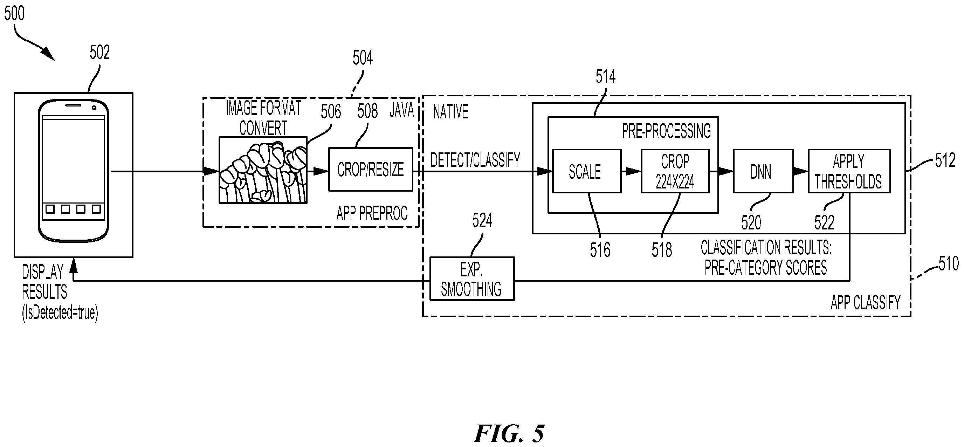

FIGURE 5 is a block diagram illustrating the run-time operation 500 of an AI application on a smartphone 502. The AI application may include a pre-process module 504 that may be configured (using for example, the JAVA programming language) to convert the format of an image 506 and then crop and/or resize the image 508. The pre-processed image may then be communicated to a classify application 510 that contains a SceneDetect Backend Engine 512 that may be configured (using for example, the C programming language) to detect and classify scenes based on visual input. The SceneDetect Backend Engine 512 may be configured to further preprocess 514 the image by scaling 516 and cropping 518. For example, the image may be scaled and cropped so that the resulting image is 224 pixels by 224 pixels. These dimensions may map to the input dimensions of a neural network. The neural network may be configured by a deep neural network block 520 to cause various processing blocks of the SOC 100 to further process the image pixels with a deep neural network. The results of the deep neural network may then be thresholded 522 and passed through an exponential smoothing block 524 in the classify application 510. The smoothed results may then cause a change of the settings and/or the display of the smartphone 502.

In one configuration, a machine learning model is configured for generating, designing, obtaining, and/or synthetically generating. The model includes a generating means, designing means, obtaining means and/or synthetically generating means. In one aspect, the generating means, designing means, obtaining means and/or synthetically generating means may be the general-purpose processor 102, program memory associated with the general-purpose processor 102, memory block 118, local processing units 202, and or the routing connection processing units 216 configured to perform the functions recited. In another configuration, the aforementioned means may be any module or any apparatus configured to perform the functions recited by the aforementioned means.

According to certain aspects of the present disclosure, each local processing unit 202 may be configured to determine parameters of the network based upon desired one or more functional features of the network, and develop the one or more functional features towards the desired functional features as the determined parameters are further adapted, tuned and updated.

### DETECTING UNKNOWN CLASSES AND INITIALIZING CLASSIFIERS

In most systems, a classifier, such as a support vector machine, is specified to work in conjunction with a feature extractor. For example, the deep convolutional network extracts features from an input and the classifier categorizes the input based on the extracted features. That is, the classifier determines whether the features belong to a known or unknown class. Furthermore, the input may be classified based on the classes assigned to the extracted features.

As previously discussed, a multi-class classifier may be trained with multiple classes to associate a received sample with a class. For example, the multi-class classifier may receive an image of a car and determine the type of car based on the trained classes. Still, in some cases, such as during the test of a network, a sample may not belong to any of the classes that were used to train a multi-class classifier. Thus, it may be desirable to generate a framework to initialize the multi-class classifier to label an object as belonging to a known class or belonging to an unknown class. The multi-class classifier may be referred to as the classifier.

In one configuration, a binary classifier is used in conjunction with a classifier, such as a support vector machine, to determine whether a sample belongs to a known or unknown class. Specifically, in this configuration, the vector of scores produced by a multi-class classifier, or a subset of the multi-class classifier, are used as a feature vector to build a binary classifier. The binary classifier is specified for classifying a sample as known or unknown.

Additionally, in some cases there may only be one class for a classifier. For example, the classifier may be specified to determine whether an object is a dog. In this example, when an image is presented to the classifier, the object is classified either as a dog or not a dog. Still, it may be desirable to create a framework to initialize a classifier to recognize an input as belonging to the one known class or to assign an unknown label to the input.

As previously discussed, the classifier may generate a vector of scores indicating the confidence (e.g., probability) of the sample belonging to each class. In most cases, the scores are normalized to generate a confidence for each class and a class having the highest confidence may be selected as the winning class.

In one configuration, the un-normalized (e.g., raw) scores may be used for a binary classifier. In most cases, when a known sample is received, the raw scores may be distributed so that the raw scores of one or more classes have reduced values and a raw score of a specific class has an increased value. Furthermore, when an unknown sample is received, the values of the raw scores may be uniform amongst the classes, e.g., uniformly low. If the confidence (e.g., scores) is low for all classes, then it can be determined that the image is unknown. In this example, a raw score may have a range that is beyond the normalized score range of 0 to 1, such as -10 to 10, where 10 is the highest confidence and -10 is the lowest confidence. Of course, the range is not limited to -10 to 10 and may be any range. In the present disclosure, a raw score may be referred to as a score.

In this configuration, the score vector may be used to train a binary classifier. That is, the binary classifier may be trained to recognize the pattern of the scores so that the binary classifier may recognize whether a sample is known or unknown. Thus, in one configuration, the binary classifier determines whether a sample is known or unknown prior to the classifier assigning a class to a sample. For example, if the sample is an unknown class, the classifier may not determine the class. Alternatively, if the sample belongs to the known class, the classifier may be specified to determine the class.

The present disclosure is not limited to known and unknown classes, the binary classifier may be specified to perform other types of binary distinctions, such as men/women, faces with glasses/faces without glasses, and/or long hair/short hair. For example, a classifier may have classes for detecting the faces of different women. In this example, if the binary classifier is specified to determine men and women, the classifier may not determine the class if the binary classifier determines that the input is a face of a man.

Furthermore, a binary classifier may be specified based on a threshold for each score of multiple scores, such as the top two scores for a sample in the claimed embodiments of the invention, of an n-element score vector, where n is the number of classes. That is, in this example, a threshold is specified for each of the top two scores. Furthermore, the sample is classified as unknown if a score of a sample is less than the threshold for each of the top two scores. Alternatively, the sample is classified as known if a score of a sample is greater than the threshold for the top two scores.

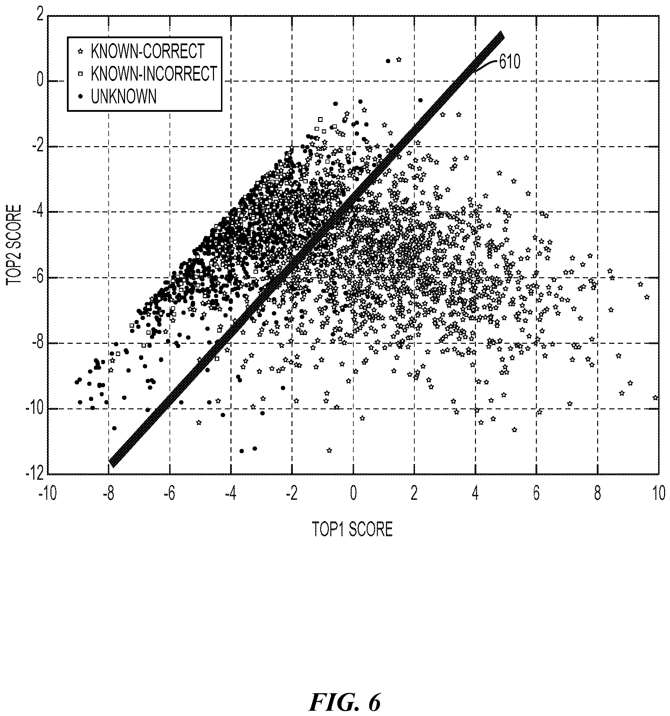

FIGURE 6 illustrates an example of a two-dimensional binary classifier 610 based on thresholds set for each of the top two scores of an n-element score vector. As shown in FIGURE 6, the x-axis is a range of scores of the highest scoring class for the sample and the y-axis is a range of scores of the second highest scoring class for the sample.

In one example, as shown in FIGURE 6, if a sample has a high score of 4 and a second high score of -6, the sample may be classified as a known sample. Furthermore, in another example, as shown in FIGURE 6, if a sample has a high score of -2 and a second high score of -2, the sample may be classified as unknown. That is, in this example, the sample is classified as known if the score is greater than the two-dimensional binary classifier 610 and the sample is classified as unknown if the score is less than the two-dimensional binary classifier 610. More specifically, samples to the left of the two-dimensional binary classifier 610 are classified as unknown and samples to the right of the two-dimensional binary classifier 610 are classified as known samples.

Still, as shown in FIGURE 6, false positives and false negatives may be generated based on the two-dimensional binary classifier 610. False positives refer to unknown samples that may be classified as known samples. Additionally, false negatives refer to known samples that may be classified as unknown samples. Furthermore, as shown in FIGURE 6, some samples may be known samples that are incorrectly classified.

In some cases, the number of false positives and false negatives may be reduced by adjusting the thresholds for the binary classifier. Furthermore, it may be desirable to increase the number of dimensions used for the binary classifier to improve results. Still, it may not be desirable to use a one-dimensional binary classifier.

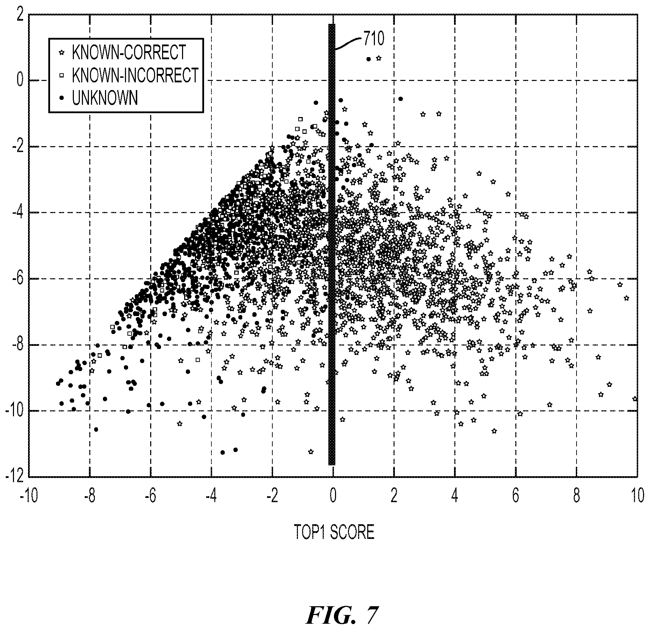

FIGURE 7 shows an example of a one-dimensional binary classifier 710. As shown in FIGURE 7, a threshold may be set to zero for the highest score received for a sample from an n-element score vector. In this example, the sample is classified as known if the score is greater than the one-dimensional binary classifier 710 and the sample is classified as unknown if the score is less than the one-dimensional binary classifier 710. Still, as shown in FIGURE 7, the number of false negatives for the one-dimensional binary classifier 710 is greater than the number of false negatives for the two-dimensional binary classifier 610. Thus, it may be desirable to specify a binary classifier having a dimension that is greater than one.

In one configuration, when an increased number of unknown samples are received, the unknown samples may be clustered to generate an unknown class. The unknown class may be used to initialize an unknown class in a classifier and/or modify an existing unknown class. Furthermore, in one configuration, a user may be polled to determine if the unknown data should be labeled so that the unknown data becomes known data.

In some cases, a classifier may be initialized on one known class. Therefore, it may be desirable to initialize the classifier to add one or more unknown classes. Thus, in one configuration, one or more additional training sets include a group of samples taken from classes outside of the known groups. The one or more additional training sets may be used to initialize unknown classifiers to classify unknown samples. For example, an additional classifier boundary may be generated to separate all known classes from the unknown class.

In one configuration, the unknown samples may be random training samples from a distribution that excludes the known classes. That is, samples may include positive examples as well as one or more negative examples of the class that is being trained. For example, if the class is being trained on images of a specific model of car, the positive examples include examples of the specific car model and the negative examples include examples of other car models.

In another configuration, the unknown samples are synthetic samples. That is, synthetic unknown class features may be generated by applying a transformation on each known class feature to separate the known class feature from the other known classes using a metric, such as a distance metric, in the feature space.

In one configuration, multiple points that describe a class in a feature space are specified to create a negative class. For example, if a cloud of points may describe a class, a vector is generated from each sample to the middle of the cloud. Furthermore, in this example, each vector may be flipped and a negative sample is generated from the end of the flipped vector. In another configuration, points in a vector space that surround a class are specified to generate a negative class. The points may refer to vectors generated from positive samples.

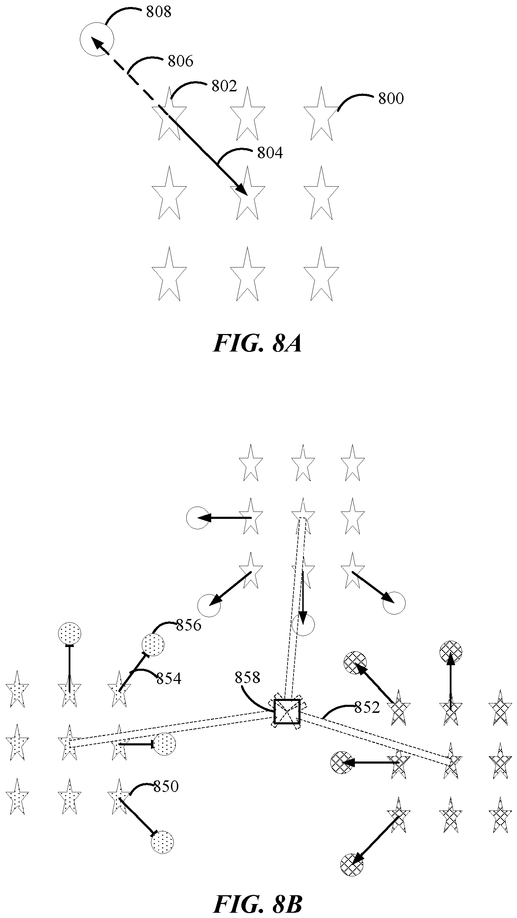

FIGURE 8A illustrates an example of using positive points 800 to create a negative class according to an aspect of the present disclosure. As shown in FIGURE 8A, multiple positive points 800 form a cluster in a feature space. Furthermore, as shown in FIGURE 8A, a first vector 804 is calculated from a first point 802 to the center of the cluster. Additionally, a second vector 806 is generated by flipping the first vector 804. Finally, a first synthetic negative point 808 is generated based on the second vector 806. In this example, a synthetic class is generated based on the synthetic negative points generated from the vector of each positive point. That is, for every positive point, a synthetic negative point is generated. The aspects disclosed in FIGURE 8A are not limited to a specific cluster and are also contemplated for different groups of clusters.

FIGURE 8B illustrates an example of using positive points 850 to create a negative class according to an aspect of the present disclosure. As shown in FIGURE 8B, multiple positive points 850 form a cluster in a feature space. Furthermore, in this example, a global centroid 858 of the multiple positive points 850 in each class is determined and is used to define a central direction from each class centroid to the global centroid. A negative vector 854 is also defined for each point as the negative of the vector from the cluster centroid and each point. Based on the angle between the negative vector 854 and the central vector 852, negative vectors are kept when pointing in the same general direction as the central vector 852, where the general direction is defined by the dot product of the negative vector and the central vector.

For example, vectors with an angle of less than 90 degrees between them could be considered pointing in the same general direction, as shown in FIGURE 8B. A negative point 856 is generated from each negative vector 854 remaining after removing those that are not pointing in the general direction of the central vector. Additionally, a negative class is generated from the negative points 856. The aspects disclosed in FIGURES 8A and 8B are not limited to a specific cluster and are also contemplated for different groups of clusters.

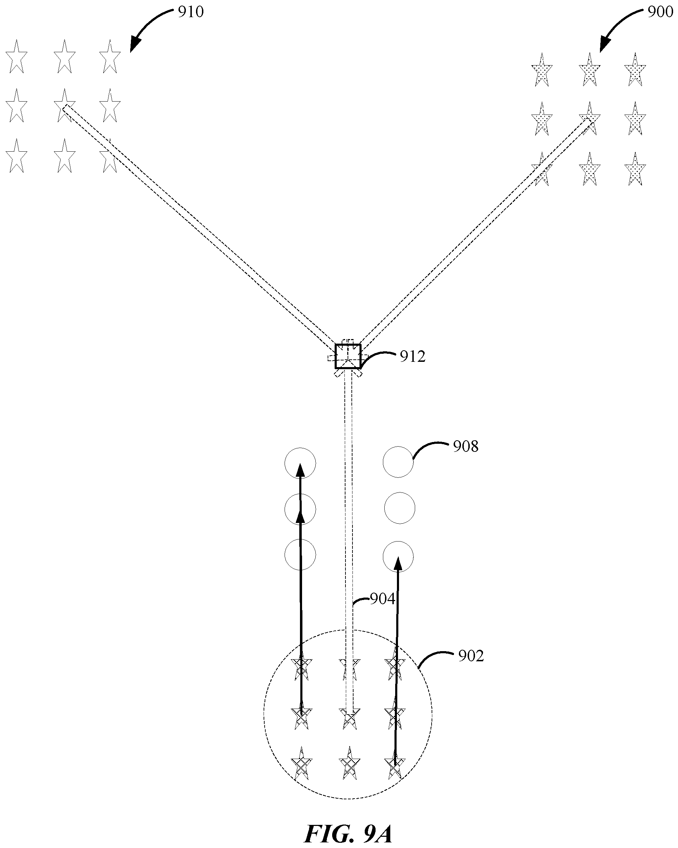

FIGURE 9A illustrates an example of using a group of clusters 900, 902, 910 to create a negative class according to an aspect of the present disclosure. As shown in FIGURE 9A, multiple clusters 900, 902, 910 may be formed from positive points in a feature space. In this example, a central vector is calculated from each cluster to the global center of the group of clusters 900, 902, 910. For example, as shown in FIGURE 9A, a first vector 904 is calculated from the first cluster group 902 to the global center 912. Finally, one or more negative points 908 are generated by adding a scaled version of the central vector (e.g. 904) to some or all of the points in the positive class. In this example, a synthetic negative class is generated based on the negative points 908 (The vectors from clusters 900, 910 are not shown).

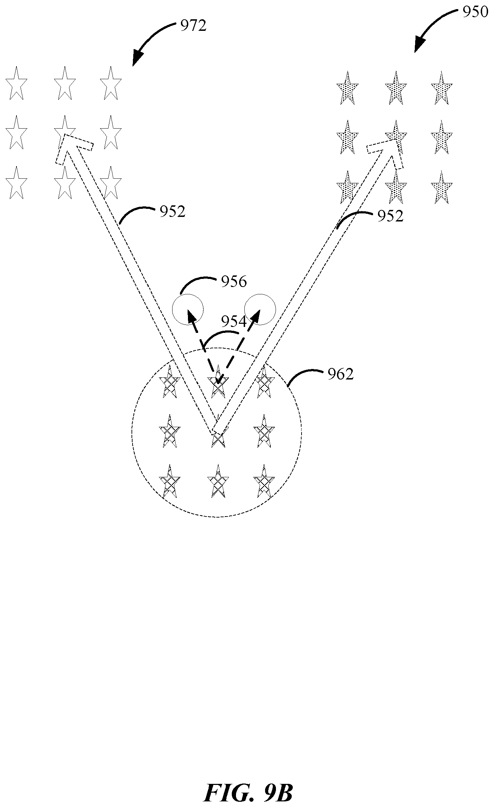

FIGURE 9B illustrates an example of using a group of clusters 950, 962, 972 to create a negative class according to an aspect of the present disclosure. As shown in FIGURE 9B, multiple clusters 950, 962, 972 may be formed from positive points in a feature space. Furthermore, in this example, two cluster vectors 952 from cluster 962 to clusters 950, and 972 are determined. Based on the cluster vectors 952, negative vectors 954 (only two are shown) are generated for points in the cluster 962. The negative vectors 954 may be generated for all or some of the points in the cluster. Furthermore, one or more negative points 956 are generated from each negative vector 954. Additionally, a negative class is generated from the negative points 956.

In yet another aspect, unsupervised learning occurs on an unknown class. The unknown class is analyzed to obtain a cluster. The cluster can then be sent to a more sophisticated network to identify the cluster.

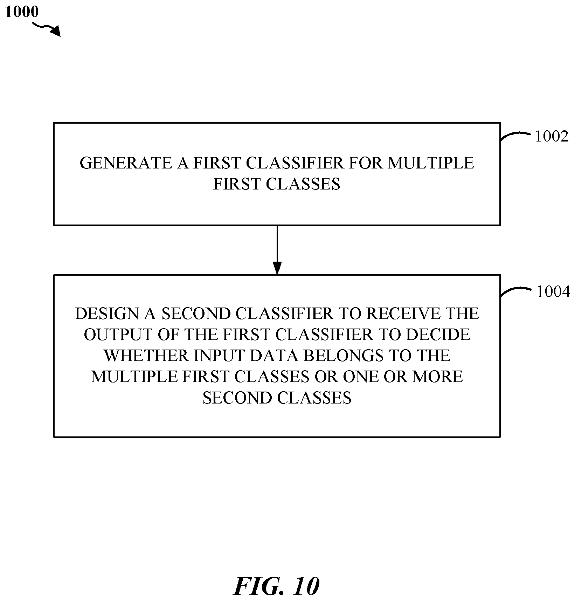

FIGURE 10 illustrates a method 1000 for unknown class detection. In block 1002, the network generates a first classifier for a multiple first classes. In one configuration, the output has a dimension of at least two. Furthermore, in block 1004, the network designs a second classifier to receive the output of the first classifier to decide whether input data belongs to the multiple first classes or one or more second classes. The second classifier can be either linear or non-linear.

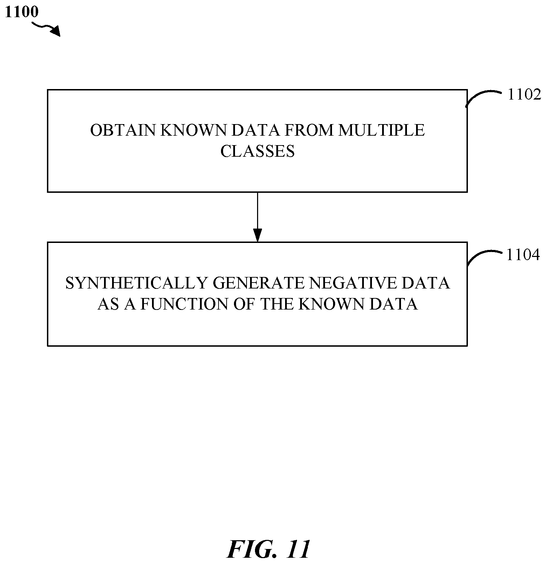

FIGURE 11 illustrates a method 1100 for generating synthetic negative data. In block 1102, the network obtains known data from multiple classes. Furthermore, in block 1104, the network synthetically generates negative data as a function of the known data.

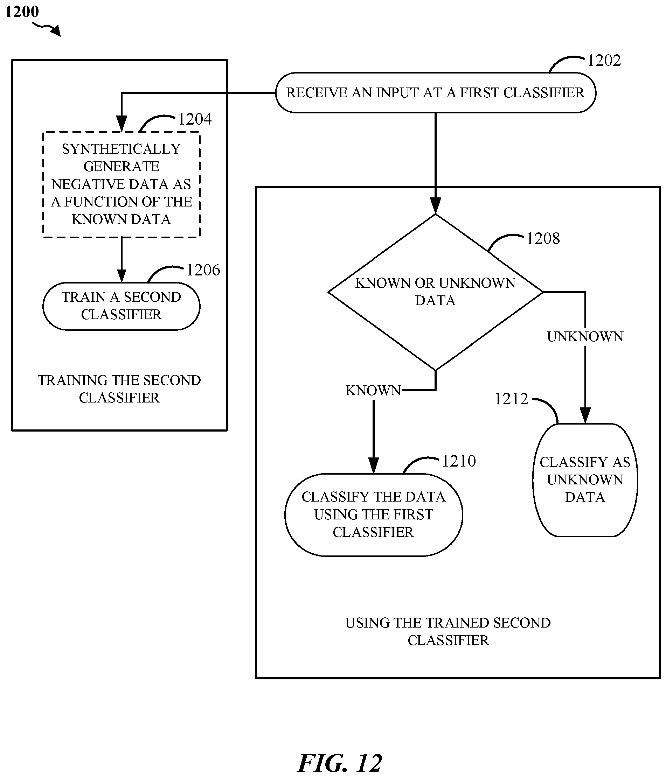

FIGURE 12 illustrates a flow diagram 1200 for unknown class detection according to an aspect of the present disclosure. In block 1202, a first classifier receives an input. The classifier may classify the input based on extracted features of the input or to train a second classifier based on extracted features of the input. In the claimed embodiments of the invention, the input is an image. The first classifier may be a single class classifier or a multi-class classifier.

The first classifier outputs a vector of scores indicating the confidence (e.g., probability) of the sample belonging to one or more classes. In conventional systems, the scores are normalized to generate a confidence for each class and a class having the highest confidence may be selected as the winning class. In the claimed embodiments of the invention, the un-normalized (e.g., raw) scores are used to train a second classifier, which is a binary classifier. That is, the second classifier is trained with examples of data belonging to one or more known classes and data not belonging to the one or more known classes.

In one configuration, the data not belonging to the one or more known classes is negative data synthetically generated as a function of the known data. Thus, as an option, at block 1204, negative data is synthetically generated as a function of the known data. Furthermore, in block 1206, the second classifier is trained on the scores of the known data and the unknown data. That is, the binary classifier may be trained to recognize the pattern of the scores so that the binary classifier may recognize whether a sample is known or unknown.

After training, the first classifier may receive an input and output the raw scores to the trained second classifier. At block 1208, the trained second classifier determines whether a sample is known or unknown prior to the first classifier assigning a class to an extracted feature. For example, if the extracted feature is an unknown class, the first classifier may not determine the class and the second classifier classifies an extracted feature as unknown (block 1212). Alternatively, if the extracted feature belongs to a known class, the first classifier may be specified to determine the class (block 1210).

The various operations of methods described above may be performed by any suitable means capable of performing the corresponding functions. The means may include various hardware and/or software component(s) and/or module(s), including, but not limited to, a circuit, an application specific integrated circuit (ASIC), or processor. Generally, where there are operations illustrated in the figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database or another data structure), ascertaining and the like. Additionally, "determining" may include receiving (e.g., receiving information), accessing (e.g., accessing data in a memory) and the like. Furthermore, "determining" may include resolving, selecting, choosing, establishing and the like.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various illustrative logical blocks, modules and circuits described in connection with the present disclosure may be implemented or performed with a general-purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general-purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, erasable programmable read-only memory (EPROM), electrically erasable programmable read-only memory (EEPROM), registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method.

The functions described may be implemented in hardware, software, firmware, or any combination thereof. If implemented in hardware, an example hardware configuration may comprise a processing system in a device. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement signal processing functions. For certain aspects, a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, random access memory (RAM), flash memory, read only memory (ROM), programmable read-only memory (PROM), erasable programmable read-only memory (EPROM), electrically erasable programmable Read-only memory (EEPROM), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the device, all which may be accessed by the processor through the bus interface. Alternatively, or in addition, the machine-readable media, or any portion thereof, may be integrated into the processor, such as the case may be with cache and/or general register files. Although the various components discussed may be described as having a specific location, such as a local component, they may also be configured in various ways, such as certain components being configured as part of a distributed computing system.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may comprise one or more neuromorphic processors for implementing the neuron models and models of neural systems described herein. As another alternative, the processing system may be implemented with an application specific integrated circuit (ASIC) with the processor, the bus interface, the user interface, supporting circuitry, and at least a portion of the machine-readable media integrated into a single chip, or with one or more field programmable gate arrays (FPGAs), programmable logic devices (PLDs), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module. Furthermore, it should be appreciated that aspects of the present disclosure result in improvements to the functioning of the processor, computer, machine, or other system implementing such aspects.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Additionally, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A computer-implemented method (1000) of detecting unknown classes in an image, comprising:
generating (1002) a first classifier for a first plurality of classes, each class corresponding to an object in the image, the first classifier receiving input data in the form of the image, and an output of the first classifier having a vector of scores of dimension of at least two, the vector of scores indicating the confidence of the input data belonging to one or more classes of the first plurality of classes, and wherein the scores are raw scores output by the first classifier for data which is not normalized;
designing (1004) a second classifier to receive, as an input, the output of the first classifier, wherein the second classifier is a binary classifier that is adapted to decide whether the input data belongs to the first plurality of classes or an unknown class based on a threshold (610) set for each of the top two scores, wherein designing (1004) the second classifier comprises training the second classifier with examples of data belonging to the first plurality of classes and data not belonging to the first plurality of classes and adjusting the thresholds; and
classifying the input data into the unknown class when the input data does not belong to one of the first plurality of classes, wherein classifying the input data further comprises:
the second classifier classifying the input data into the unknown class when the vector of scores is less than the threshold (610) for each of the top two scores; and
the second classifier determining that the input data is known when the vector of scores is greater than the threshold (610) for the top two scores and the first classifier classifying the input data into a class of the first plurality of classes.

2. The computer-implemented method of claim 1, in which the data not belonging to the first plurality of classes comprises synthetically generated negative data.

3. The computer-implemented method of claim 2, in which the synthetically generated negative data is a function of known data from the first plurality of classes.

4. The computer-implemented method of claim 1, further comprising modifying a boundary of at least one of the first plurality of classes, the unknown class, or a combination thereof based at least in part on the data not belonging to the first plurality of classes.

5. The computer-implemented method of claim 1, in which the second classifier is linear or non-linear.

6. The computer-implemented method of claim 1, further comprising polling a user to determine if the unknown data should be labeled so that the unknown data becomes known data.

7. The computer-implemented method of claim 3, wherein the synthetic negative data (808, 856, 908, 956) is generated by:
obtaining (1102, 1210) the known data (802, 850, 902, 962) from the first plurality of classes;
synthetically generating (1104, 1204) the negative data (808, 856, 908, 956) as a function of the known data (802, 850, 902, 962); and
training the second classifier on raw scores of the negative data (808, 856, 908, 956) and raw scores of the known data (802, 850, 902, 962), wherein raw scores are scores output by the first classifier for data which is not normalized.

8. The computer-implemented method of claim 7, in which synthetically generating the negative data further comprises:
computing a first vector between each known data point in a cluster of known data and a centroid of the cluster;
computing a second vector between a centroid of class specific clusters and a centroid of all known data points independent of class;
and generating the negative data from a scaled version of the second vector from one or more of the known data points or generating the negative data from a negative vector of the first vector.

9. The computer-implemented method of claim 7, further comprising modifying a boundary of at least one of the first plurality of classes, the unknown class wherein the unknown class comprises a cluster of unknown samples, or a combination thereof based at least in part on the negative data.

10. A non-transitory computer-readable medium comprising instructions which, when executed by a processor, cause the processor to carry out the method of any one of claims 1 to 9.

11. An apparatus for detecting unknown classes in an image, comprising:
means for generating a first classifier for a first plurality of classes, each class corresponding to an object in the image, the first classifier receiving input data in the form of the image, and an output of the first classifier having a vector of scores of dimension of at least two, the vector of scores indicating the confidence of the input data belonging to one or more classes of the first plurality of classes, and wherein the scores are raw scores output by the first classifier for data which is not normalized;
means for designing a second classifier to receive, as an input, the output of the first classifier, wherein the second classifier is a binary classifier that is adapted to decide whether the input data belongs to the first plurality of classes or an unknown class based on a threshold (610) set for each of the top two scores, wherein the means for designing the second classifier comprises means for training the second classifier with examples of data belonging to the first plurality of classes and data not belonging to the first plurality of classes and adjusting the thresholds; and
means for classifying the input data into the unknown class when the input data does not belong to one of the first plurality of classes wherein classifying the input data further comprises:
the second classifier classifying the input data into the unknown class when the vector of scores is less than the threshold (610) for each of the top two scores; and
the second classifier determining that the input data is known when the vector of scores is greater than the threshold (610) for the top two scores and the first classifier classifying the input data into a class of the first plurality of classes.

12. The apparatus of claim 11, in which the data not belonging to the first plurality of classes comprises synthetically generated negative data and in which the synthetically generated negative data is a function of known data from the first plurality of classes, and further comprising means for generating the synthetic negative data comprising:
means for obtaining the known data (802, 850, 902, 962) from the first plurality of classes;
means for synthetically generating the negative data (808, 856, 908, 956) as a function of the known data (802, 850, 902, 962); and
means for training the second classifier on raw scores of the negative data (808, 856, 908, 956) and raw scores of the known data (802, 850, 902, 962), wherein raw scores are scores output by the first classifier for data which is not normalized.

## Patentansprüche

1. Ein computerimplementiertes Verfahren (1000) zum Erfassen von unbekannten Klassen in einem Bild, aufweisend:
Generieren (1002) eines ersten Klassifizierers für eine erste Vielzahl von Klassen, wobei jede Klasse einem Objekt in dem Bild entspricht, wobei der erste Klassifizierer Eingabedaten in der Form des Bilds empfängt, und wobei eine Ausgabe des ersten Klassifizierers einen Vektor von Bewertungen der Dimension von wenigstens zwei aufweist, wobei der Vektor von Bewertungen die Zuversicht, dass die Eingabedaten zu einer oder mehreren Klassen aus der ersten Vielzahl von Klassen gehören, angibt und wobei die Bewertungen rohe Bewertungen sind, die durch den ersten Klassifizierer für nicht normalisierte Daten ausgegeben werden,
Entwerfen (1004) eines zweiten Klassifizierers für das Empfangen, als einer Eingabe, der Ausgabe des ersten Klassifizierers, wobei der zweite Klassifizierer ein binärer Klassifizierer ist, der ausgebildet ist zum Entscheiden, ob die Eingabedaten zu der ersten Vielzahl von Klassen oder zu einer unbekannten Klasse gehören, basierend auf einem für jede der höchsten zwei Bewertungen gesetzten Schwellwert (610), wobei das Entwerfen (1004) des zweiten Klassifizierers das Trainieren des zweiten Klassifizierers mit Beispielen von zu der ersten Vielzahl von Klassen gehörenden Daten und nicht zu der ersten Vielzahl von Klassen gehörenden Daten und das Einstellen der Schwellwerte aufweist, und
Klassifizieren der Eingabedaten in die unbekannte Klasse, wenn die Eingabedaten nicht zu einer aus der ersten Vielzahl von Klassen gehören, wobei das Klassifizieren der Eingabedaten weiterhin aufweist:
Klassifizieren, durch den zweiten Klassifizierer, der Eingabedaten in die unbekannte Klasse, wenn der Vektor von Bewertungen kleiner als der Schwellwert (610) für jede der höchsten zwei Bewertungen ist, und
Bestimmen, durch den zweiten Klassifizierer, dass die Eingabedaten bekannt sind, wenn der Vektor von Bewertungen größer als der Schwellwert (610) für die höchsten zwei Bewertungen ist und der erste Klassifizierer die Eingabedaten in eine Klasse aus der ersten Vielzahl von Klassen klassifiziert.

2. Computerimplementiertes Verfahren nach Anspruch 1, wobei die nicht zu der ersten Vielzahl von Klassen gehörenden Daten synthetisch generierte negative Daten aufweisen.

3. Computerimplementiertes Verfahren nach Anspruch 2, wobei die synthetisch generierten negativen Daten eine Funktion von bekannten Daten aus der ersten Vielzahl von Klassen sind.

4. Computerimplementiertes Verfahren nach Anspruch 1, das weiterhin das Modifizieren einer Grenze wenigstens einer aus der ersten Vielzahl von Klassen, der unbekannten Klasse oder einer Kombination aus diesen basierend wenigstens teilweise auf den nicht zu der ersten Vielzahl von Klassen gehörenden Daten aufweist.

5. Computerimplementiertes Verfahren nach Anspruch 1, wobei der zweite Klassifizierer linear oder nicht-linear ist.

6. Computerimplementiertes Verfahren nach Anspruch 1, das weiterhin das Befragen eines Benutzers für das Bestimmen, ob die unbekannten Daten etikettiert werden sollen, sodass die unbekannten Daten bekannte Daten werden, aufweist.

7. Computerimplementiertes Verfahren nach Anspruch 3, wobei die synthetischen negativen Daten (808, 856, 908, 956) generiert werden durch:
Erhalten (1102, 1210) der bekannten Daten (802, 850, 902, 962) aus der ersten Vielzahl von Klassen,
synthetisches Generieren (1104, 1204) der negativen Daten (808, 856, 908, 956) als einer Funktion der bekannten Daten (802, 850, 902, 962), und
Trainieren des zweiten Klassifizierers auf rohen Bewertungen der negativen Daten (808, 856, 908, 956) und von rohen Bewertungen der bekannten Daten (802, 850, 902, 962), wobei die rohen Bewertungen durch den ersten Klassifizierer für nicht normalisierte Daten ausgegebene Bewertungen sind.

8. Computerimplementiertes Verfahren nach Anspruch 7, wobei das synthetische Generieren der negativen Daten weiterhin aufweist:
Berechnen eines ersten Vektors zwischen jedem bekannten Datenpunkt in einem Cluster von bekannten Daten und einem Schwerpunkt des Clusters,
Berechnen eines zweiten Vektors zwischen einem Schwerpunkt von klassenspezifischen Clustern und einem Schwerpunkt aller bekannten Datenpunkte unabhängig von der Klasse, und
Generieren der negativen Daten aus einer skalierten Version des zweiten Vektors von einem oder mehreren der bekannten Datenpunkte, oder Generieren der negativen Daten aus einem negativen Vektor des ersten Vektors.

9. Computerimplementiertes Verfahren nach Anspruch 7, das weiterhin das Modifizieren einer Grenze wenigstens einer aus der ersten Vielzahl von Klassen, der unbekannten Klasse, wobei die unbekannte Klasse ein Cluster von unbekannten Abtastungen aufweist, oder einer Kombination aus diesen basierend wenigstens teilweise auf den negativen Daten aufweist.

10. Ein nicht-transitorisches, computerlesbares Medium, das Befehle aufweist, die bei einer Ausführung durch einen Prozessor den Prozessor zum Durchführen des Verfahrens gemäß einem der Ansprüche 1 bis 9 veranlassen.

11. Eine Vorrichtung zum Erfassen von unbekannten Klassen in einem Bild, aufweisend:
Mittel zum Generieren eines ersten Klassifizierers für eine erste Vielzahl von Klassen, wobei jede Klasse einem Objekt in dem Bild entspricht, wobei der erste Klassifizierer Eingabedaten in der Form des Bilds empfängt, und wobei eine Ausgabe des ersten Klassifizierers einen Vektor von Bewertungen der Dimension von wenigstens zwei aufweist, wobei der Vektor von Bewertungen die Zuversicht, dass die Eingabedaten zu einer oder mehreren Klassen aus der ersten Vielzahl von Klassen gehören, angibt und wobei die Bewertungen rohe Bewertungen sind, die durch den ersten Klassifizierer für nicht normalisierte Daten ausgegeben werden,
Mittel zum Entwerfen eines zweiten Klassifizierers für das Empfangen, als einer Eingabe, der Ausgabe des ersten Klassifizierers, wobei der zweite Klassifizierer ein binärer Klassifizierer ist, der ausgebildet ist zum Entscheiden, ob die Eingabedaten zu der ersten Vielzahl von Klassen oder zu einer unbekannten Klasse gehören, basierend auf einem für jede der höchsten zwei Bewertungen gesetzten Schwellwert (610), wobei die Mittel zum Entwerfen des zweiten Klassifizierers Mittel zum Trainieren des zweiten Klassifizierers mit Beispielen von zu der ersten Vielzahl von Klassen gehörenden Daten und nicht zu der ersten Vielzahl von Klassen gehörenden Daten und das Einstellen der Schwellwerte aufweisen, und
Mittel zum Klassifizieren der Eingabedaten in die unbekannte Klasse, wenn die Eingabedaten nicht zu einer aus der ersten Vielzahl von Klassen gehören, wobei das Klassifizieren der Eingabedaten weiterhin aufweist:
Klassifizieren, durch den zweiten Klassifizierer, der Eingabedaten in die unbekannte Klasse, wenn der Vektor von Bewertungen kleiner als der Schwellwert (610) für jede der höchsten zwei Bewertungen ist, und
Bestimmen, durch den zweiten Klassifizierer, dass die Eingabedaten bekannt sind, wenn der Vektor von Bewertungen größer als der Schwellwert (610) für die höchsten zwei Bewertungen ist und der erste Klassifizierer die Eingabedaten in eine Klasse aus der ersten Vielzahl von Klassen klassifiziert.

12. Vorrichtung nach Anspruch 11, wobei die nicht zu der ersten Vielzahl von Klassen gehörenden Daten synthetisch generierte negative Daten aufweisen und wobei die synthetisch generierten negativen Daten eine Funktion von bekannten Daten aus der ersten Vielzahl von Klassen sind, wobei die Vorrichtung weiterhin Mittel zum Generieren der synthetischen negativen Daten aufweisen, die aufweisen:
Mittel zum Erhalten der bekannten Daten (802, 850, 902, 962) aus der ersten Vielzahl von Klassen,
Mittel zum synthetischen Generieren der negativen Daten (808, 856, 908, 956) als einer Funktion der bekannten Daten (802, 850, 902, 962), und
Mittel zum Trainieren des zweiten Klassifizierers auf rohen Bewertungen der negativen Daten (808, 856, 908, 956) und von rohen Bewertungen der bekannten Daten (802, 850, 902, 962), wobei die rohen Bewertungen durch den ersten Klassifizierer für nicht normalisierte Daten ausgegebene Bewertungen sind.

## Revendications

1. Procédé (1000) mis en oeuvre par ordinateur de détection de classes inconnues dans une image, comprenant les étapes consistant à :
générer (1002) un premier classificateur pour une première pluralité de classes, chaque classe correspondant à un objet sur l'image, le premier classificateur recevant des données d'entrée sous la forme de l'image, et une sortie du premier classificateur ayant un vecteur de scores dont une dimension est au moins égale à deux, le vecteur de scores indiquant la confiance des données d'entrée appartenant à une ou plusieurs classes de la première pluralité de classes, et les scores étant des scores bruts délivrés en sortie par le premier classificateur pour des données qui ne sont pas normalisées ;
concevoir (1004) un second classificateur pour qu'il reçoive, en guise d'entrée, la sortie du premier classificateur, le second classificateur étant un classificateur binaire qui est adapté pour décider si les données d'entrée appartiennent à la première pluralité de classes ou à une classe inconnue sur la base d'un seuil (610) fixé pour chacun des deux meilleurs scores, la conception (1004) du second classificateur comprenant les étapes consistant à former le second classificateur avec des exemples de données appartenant à la première pluralité de classes et de données n'appartenant pas à la première pluralité de classes, et à régler les seuils ; et
classer les données d'entrée dans la classe inconnue lorsque les données d'entrée n'appartiennent pas à une classe de la première pluralité de classes, la classification des données d'entrée comprenant en outre les étapes consistant à :
classer, par le second classificateur, les données d'entrée dans la classe inconnue lorsque le vecteur de scores est inférieur au seuil (610) pour chacun des deux meilleurs scores ; et
déterminer, par le second classificateur, que les données d'entrée sont connues lorsque le vecteur de scores est supérieur au seuil (610) pour les deux meilleurs scores, et classer, par le premier classificateur, les données d'entrée dans une classe de la première pluralité de classes.

2. Procédé mis en oeuvre par ordinateur selon la revendication 1, dans lequel les données n'appartenant pas à la première pluralité de classes comprennent des données négatives générées synthétiquement.

3. Procédé mis en oeuvre par ordinateur selon la revendication 2, dans lequel les données négatives générées synthétiquement sont une fonction de données connues de la première pluralité de classes.

4. Procédé mis en oeuvre par ordinateur selon la revendication 1, comprenant en outre l'étape consistant à modifier une limite d'au moins une classe de la première pluralité de classes, de la classe inconnue ou d'une combinaison correspondante, sur la base, au moins en partie, des données n'appartenant pas à la première pluralité de classes.

5. Procédé mis en oeuvre par ordinateur selon la revendication 1, dans lequel le second classificateur est linéaire ou non linéaire.

6. Procédé mis en oeuvre par ordinateur selon la revendication 1, comprenant en outre l'étape consistant à interroger un utilisateur pour déterminer si les données inconnues doivent être étiquetées de manière que les données inconnues deviennent des données connues.

7. Procédé mis en oeuvre par ordinateur selon la revendication 3, dans lequel les données négatives synthétiques (808, 856, 908, 956) sont générées en effectuant les étapes consistant à :
obtenir (1102, 1210) les données connues (802, 850, 902, 962) à partir de la première pluralité de classes ;
générer synthétiquement (1104, 1204) les données négatives (808, 856, 908, 956) en fonction des données connues (802, 850, 902, 962) ; et
former le second classificateur sur des scores bruts des données négatives (808, 856, 908, 956) et des scores bruts des données connues (802, 850, 902, 962), les scores bruts étant des scores délivrés en sortie par le premier classificateur pour des données qui ne sont pas normalisées.

8. Procédé mis en oeuvre par ordinateur selon la revendication 7, dans lequel la génération synthétique des données négatives comprend en outre les étapes consistant à :
calculer un premier vecteur entre chaque point de données connu d'une grappe de données connues et un centroïde de la grappe ;
calculer un second vecteur entre un centroïde de grappes spécifiques d'une classe et un centroïde de tous les points de données connus indépendants de la classe ; et
générer les données négatives à partir d'une version mise à l'échelle du second vecteur à partir d'un ou plusieurs des points de données connus ou générer les données négatives à partir d'un vecteur négatif du premier vecteur.

9. Procédé mis en oeuvre par ordinateur selon la revendication 7, comprenant en outre l'étape consistant à modifier une limite de la première pluralité de classes et/ou de la classe inconnue, la classe inconnue comprenant une grappe d'échantillons inconnus, et/ou d'une combinaison correspondante, sur la base, au moins en partie, des données négatives.

10. Support non transitoire lisible par ordinateur, comprenant des instructions qui, lorsqu'elles sont exécutées par un processeur, amènent le processeur à mettre en oeuvre le procédé selon l'une quelconque des revendications 1 à 9.

11. Appareil de détection de classes inconnues dans une image, comprenant :
un moyen permettant de générer un premier classificateur pour une première pluralité de classes, chaque classe correspondant à un objet sur l'image, le premier classificateur recevant des données d'entrée sous la forme de l'image, et une sortie du premier classificateur ayant un vecteur de scores dont une dimension est au moins égale à deux, le vecteur de scores indiquant la confiance des données d'entrée appartenant à une ou plusieurs classes de la première pluralité de classes, et les scores étant des scores bruts délivrés en sortie par le premier classificateur pour des données qui ne sont pas normalisées ;
un moyen permettant de concevoir un second classificateur pour qu'il reçoive, en guise d'entrée, la sortie du premier classificateur, le second classificateur étant un classificateur binaire qui est adapté pour décider si les données d'entrée appartiennent à la première pluralité de classes ou à une classe inconnue sur la base d'un seuil (610) fixé pour chacun des deux meilleurs scores, le moyen permettant de concevoir le second classificateur comprenant un moyen permettant de former le second classificateur avec des exemples de données appartenant à la première pluralité de classes et de données n'appartenant pas à la première pluralité de classes, et de régler les seuils ; et
un moyen permettant de classer les données d'entrée dans la classe inconnue lorsque les données d'entrée n'appartiennent pas à une classe de la première pluralité de classes, la classification des données d'entrée comprenant en outre les opérations consistant à :
classer, par le second classificateur, les données d'entrée dans la classe inconnue lorsque le vecteur de scores est inférieur au seuil (610) pour chacun des deux meilleurs scores ; et
déterminer, par le second classificateur, que les données d'entrée sont connues lorsque le vecteur de scores est supérieur au seuil (610) pour les deux meilleurs scores, et classer, par le premier classificateur, les données d'entrée dans une classe de la première pluralité de classes.

12. Appareil selon la revendication 11, dans lequel les données n'appartenant pas à la première pluralité de classes comprennent des données négatives générées synthétiquement, les données négatives générées synthétiquement étant une fonction de données connues de la première pluralité de classes, et l'appareil comprenant en outre un moyen permettant de générer les données négatives synthétiques comprenant :
un moyen permettant d'obtenir les données connues (802, 850, 902, 962) à partir de la première pluralité de classes ;
un moyen permettant de générer synthétiquement les données négatives (808, 856, 908, 956) en fonction des données connues (802, 850, 902, 962) ; et
un moyen permettant de former le second classificateur sur des scores bruts des données négatives (808, 856, 908, 956) et des scores bruts des données connues (802, 850, 902, 962), les scores bruts étant des scores délivrés en sortie par le premier classificateur pour des données qui ne sont pas normalisées.
